# EUROPÄISCHE PATENTSCHRIFT

(11) **EP 0 875 559 B1**
(45) Veröffentlichungstag und Bekanntmachung des Hinweises auf die Patenterteilung: **30.06.2004**
(21) Anmeldenummer: 98106501.4
(22) Anmeldetag: 08.04.1998
(51) Int. Cl.: C12C 7/20

(54) **Verfahren und Vorrichtung zum Aufheizen und atmosphärischen Kochen der Würze bei der Bierherstellung**
Method and apparatus for heating and boiling wort at atmospheric pressure during beer production
Procédé et dispositif pour chauffage et l'ébullition de moût à pression atmsphérique au cours de la préparation de la bière

(30) Priorität: 08.04.1997 DE 19714477; 24.10.1997 DE 19747106
(43) Veröffentlichungstag der Anmeldung: 04.11.1998
(73) Patentinhaber: Anton Steinecker Maschinenfabrik GmbH, 85356 Freising-Attaching (DE)
(72) Erfinder: Stippler, Kurt, Dr. Ing., 85417 Marzling (DE); Wasmuht, Klaus-Karl, 92792 Ellingen (DE)
(74) Vertreter: Grünecker, Kinkeldey, Stockmair & Schwanhäusser Anwaltssozietät

(56) Entgegenhaltungen:
- DD-A- 260 285
- DE-A- 4 437 684
- DE-U- 29 609 642
- KORSCHENBROICH F E: "NEUARTIGE MESS-UND STEUERUNGSMETHODE DER VERDAMPFUNG BEI KOCHUNG MIT EXTERNEN WAERMETAUSCHERN" BRAUWELT, NUERNBERG, DE, Bd. 134, Nr. 43, 1994, Seiten 2238,2247-2248, XP000956004 ISSN: 0168-1656

## Beschreibung

Die Erfindung betrifft ein Verfahren und eine Vorrichtung zum Aufheizen und atmosphärischen Kochen der Würze bei der Bierherstellung.

Bekannterweise wird als ein Schritt bei der Herstellung von Bier die Würze, die im Läuterprozess gewonnen wird, aufgeheizt und gekocht. Dabei wird ihr in irgendeiner Form der Hopfen zugegeben. Diese Maßnahmen bezwecken einmal das Verdampfen des überschüssigen Wassers zur Erzielung der gewünschten Würzekonzentration, die Zerstörung der Enzyme und eine Sterilisierung der Würze sowie eine möglichst vollkommene Ausscheidung der Eiweißstoffe und schließlich soll auch die Lösung der Hopfenbestandteile, vor allem der Bitterstoffe, in der Würze bewirkt werden. Die beim Kochvorgang ablaufenden chemischen Prozesse sind vielfältiger Natur und beeinflussen letztlich die Qualität und den Geschmack des Bieres entscheidend. So ist z.B. auch bekannt, dass es wünschenswert ist, den vom Malz stammenden Dimethylsulfidprecursor in freies DMS (Dimethylsulfid) umzuwandeln und beim Kochvorgang dann auszutreiben, weil DMS in größeren Mengen dem Bier einen unerwünschten Geruch und Geschmack verleihen kann.

Die Würzekochung gliedert sich in eine Aufheizphase und eine eigentliche Kochphase. Die Aufheizphase kann einen unterschiedlichen Anteil der gesamten Kochzeit ausmachen, je nachdem, ob die Würze schon vorerhitzt aus einem Vorlaufgefäß entnommen wird oder aber erst von der Temperatur im Läuterbottich auf die Kochtemperatur erhitzt werden muss.

Bisher hat man üblicherweise bei diesem Kochprozess für die Aufheizphase einen bestimmten Druck bzw. eine bestimmte Temperatur für das Heizmedium, z.B. Heizdampf bzw. Heißwasser, vorgegeben. Für die Kochphase wurde dann entweder mit der gleichen Heizmitteltemperatur/Druck konstant gearbeitet, oder es wurde mit leicht reduzierter Energiezufuhr gekocht, solange bis sich die gewünschten chemischen Prozesse abgespielt haben. Die Dauer und die Temperatur/bzw. Druck des Heizmediums richteten sich im Wesentlichen nach Erfahrungswerten in der Brauerei. Häufig wurde auch über die gesamte Zeit, also Aufheizphase und eigentliche Kochphase mit konstanter Heizmitteltemperatur/Druck gearbeitet.

Bekannt war es auch schon, über einen bestimmten Zeitraum das Heizmedium abzuschalten und die Würze sich ohne Zufuhr von Energie selbst zu überlassen (Heißhaltephase) und danach wieder mit der zuvor gewählten Heizmitteltemperatur fortzufahren.

Diese Vorgehensweise hatte es jedoch nicht erlaubt, den individuellen Anforderungen der verschiedenen im Kochprozess ablaufenden chemischen Reaktionen ausreichend in einfacher Weise Rechnung zu tragen. Eine mehr oder weniger pauschal nach Erfahrungswerten eingestellte konstant gehaltene Heizmitteltemperatur/Druck kann nicht in optimaler Weise die für die Qualität der Würze und damit letztlich des Bieres ausschlaggebenden Prozesse berücksichtigen.

Aus der DD-PS-260285 ist es außerdem bekannt, bei der Bierwürzekochung unter Überdruck, also bei der Druckkochung, zur Erreichung eines gewünschten Drucks und einer gewünschten Temperatur im Würzekochgefäß die Heizdampfzufuhr oder die Kondensatableitung oder den Dampfdruck zu verändern.

Dieses Verfahren befaßt sich anders als die vorstehende Anmeldung aber mit der Druckkochung.

Aufgabe der Erfindung ist es ein Verfahren und eine Vorrichtung anzugeben, die es erlauben, eine bessere Würzequalität bei der atmosphärischen Kochung zu erhalten.

Gelöst wird diese Aufgabe bei einem gattungsgemäß vorausgesetzten Verfahren dadurch, daß für die Leistung der Umwälzpumpe und für wenigstens einen weiteren die Heizleistung des Würzekochers während des Aufheiz- und/oder Kochprozesses beeinflussender Parameter eine Sollwertprofilkurve erstellt und festgehalten wird, daß dann während des Aufheiz- und/oder Kochprozesses die jeweiligen Istwerte dieser Parameter kontinuierlich oder in kleinen Zeitabständen erfaßt und mit den zugeordneten Sollwerten verglichen werden und daß dann der Aufheiz- und/oder Kochprozess so gefahren wird, daß die Istwerte den Sollwertprofilkurven im wesentlichen folgen.

Mit diesen Merkmalen ist eine den individuellen Anforderungen gerecht werdende Verfahrensführung möglich, da für jeden Zeitpunkt der Würzevorerhitzung und Würzekochung die geeignete Temperatur/Druck des Heizmediums individuell vorgegeben werden kann, d.h. individuell die Energiezufuhr und damit die Heizleistung des Würzekochers vorgegeben werden kann. Die so erstellte Sollwertprofilkurve kann in einem Prozeßrechner abgelegt werden und dient dann zur Steuerung und Regelung der Energiezufuhr für den Würzeaufheiz- und kochprozess. Während des Aufheizens und Kochens werden die entsprechenden Parameter gemessen und dann der Aufheiz- und/oder Kochprozess entsprechend der Sollwertprofilkurve gefahren.

Dabei ist bei der atmosphärischen Kochung die Würzetemperatur beim eigentlichen Kochvorgang konstant, es ändert sich jedoch die durch die individuelle Vorgebemöglichkeit in den einzelnen Phasen zugeführte Energie (Heizleistung des Würzekochers) so daß insbesondere die Verdampfungsrate der Würze je nach dem ob mehr oder weniger Energie zugeführt wird, beeinflusst werden kann. Damit können für die einzelnen Phasen jeweils ablaufende chemische Prozesse individuell beeinflusst werden was die Würzequalität verbessert.

Als Parameter eignen sich alle diejenigen Größen, die die Heizleistung des Würzekochers und damit die Energiezufuhr zur Würze beeinflussen. Bei einer Würzepfanne mit Innenkocher oder Außenkocher kann dies die Heißwassertemperatur des Innenoder Außenkochers sein, es kann aber auch die Dampftemperatur oder der Dampfdruck des Heizdampfes sein, mit dem die Kocher - dabei kann es sich auch um Kombinationen von Kochern (zwei Außenkocher, Innenkocher und Außenkocher usw.; als Heizmedium kann auch Brüdendampf in Frage kommen) - beheizt werden. Auch die Dampftemperatur und der Dampfdruck beeinflussen die Heizleistung des Würzekochers.

Während der Aufheizphase, in der sich die Temperatur der Würze ändert, kann auch die Temperatur der Würze selbst als Parameter gemessen werden. Dabei ist jedoch zu berücksichtigen, daß die Temperatur in der Würzepfanne während der Aufheizphase nicht unbedingt homogen verteilt ist, so daß in diesem Fall eine charakteristische Würzetemperatur ermittelt werden sollte. Dies kann z.B. durch Temperaturmessung an verschiedenen Stellen der Würzepfanne und nachfolgende Ermittlung eines Durchschnittswertes stattfinden. Natürlich kann es aber auch ausreichen, nur einen Temperaturwert zu messen.

Erfindungsgemäß wird auch die Leistung der Umwälzpumpe in einer Sollwertprofilkurve vorgegeben. Die Leistung der Umwälzpumpe, die während des Aufheiz- und Kochvorgangs zumindest zeitweise eingeschaltet wird, um die Würze umzupumpen, bestimmt den Energieeintrag pro Zeiteinheit auf die Würze. Grundsätzlich ist das Umpumpen der Würze bereits bekannt, wie z.B. aus dem deutschen Gebrauchsmuster DE-U-29 609 642 hervorgeht.

Die erfindungsgemäße Verfahrensführung ermöglicht eine individuelle Anpassung in den einzelnen Phasen der Würzekochung an die jeweils ablaufenden chemischen Prozesse. So kann es z.B. vorteilhaft sein, etwa im Bereich des letzten Drittels der Kochzeit eine Phase mit gegenüber den vorhergehenden Sollwerten deutlich erhöhten Heizmittelsollwerten vorzusehen, mit anderen Worten im letzten Drittel des Kochprozesses die Heizmitteltemperatur (Dampf, Wasser) noch einmal deutlich anzuheben und/oder die Leistung der Umwälzpumpe entsprechend anzupassen. Durch eine solche Verfahrensführung ist es dann möglich, in der Endphase der Kochung insbesondere das Dimethylsulfid (DMS) auszutreiben, um somit die Qualität der Würze zu erhöhen.

Eine zur Durchführung des erfindungsgemäßen Verfahrens geeignete Vorrichtung ist im Anspruch 7 beschrieben.

Mit diesen Maßnahmen wird dem Brauer eine Vorrichtung zur Verfügung gestellt, in der er individuell für den gesamten Aufheiz- bzw. Kochvorgang die jeweils angestrebte Heizleistung des Würzekochers und Leistung der Umwälzpumpe in einen Speicher vorgeben kann, so daß dann beim eigentlichen Aufheiz- und/oder Kochvorgang die Anlage nach diesen abgespeicherten Daten gefahren wird. Vorzugsweise ist die Eingabemöglichkeit so beschaffen, dass für sehr kleine Zeitabstände, beispielsweise Abstände von 2 bis 3 Minuten, jeweils ein gewünschter Wert vorgegeben werden kann und sich so nach und nach die Kurve erstellen lässt. Ein typischer Aufheizund/oder Kochprozeß dauert zwischen 60 und 120 Minuten. Über den gesamten Zeitraum kann dann für kleine Abschnitte individuell ein geeigneter Parameter für die Heizleistung und die Leistung der Umwälzpumpe vorgegeben werden.

Entsprechende Sensoren sind vorgesehen, die die Werte der jeweils gewünschten Parameter messen (z.B. die Heißwassertemperatur, die Dampftemperatur oder den Dampfdruck). Auch die Drehzahl der die Würze umwälzenden Pumpe wird wie erläutert vorgegeben und dann entsprechend gesteuert.

Das erfindungsgemäße Verfahren und die erfindungsgemäße Vorrichtung werden im Folgenden anhand eines Ausführungsbeispiels weiter erläutert und beschrieben.

Dabei zeigt
- Figur 1: schematisch eine erfindungsgemäße Anlage und
- Figur 2: ein Diagramm, das einen erfindungsgemäßen Aufheiz- und Kochprozess mit einer erfindungsgemäßen Verfahrensführung darstellt.

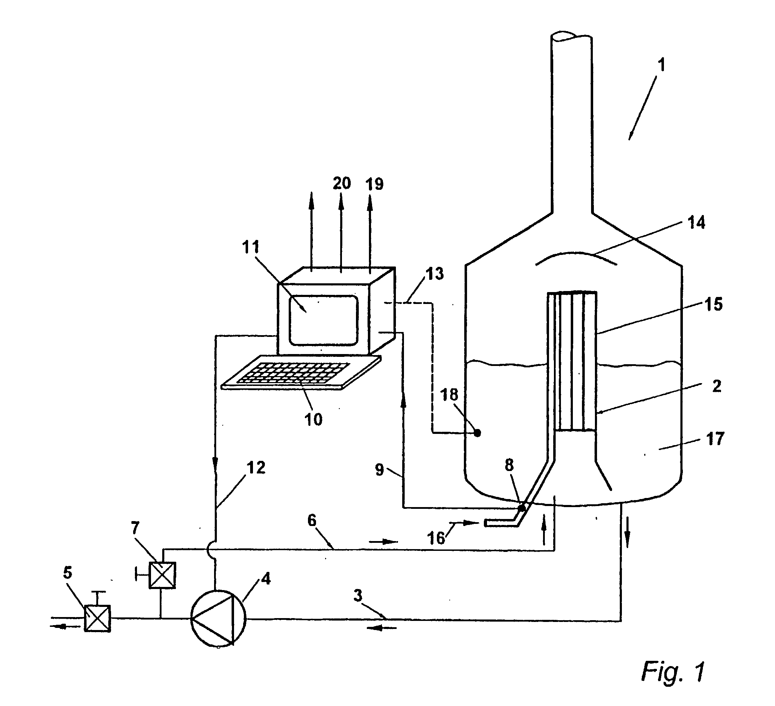

In Figur 1 ist mit 1 eine herkömmliche Würzepfanne bezeichnet, wie sie im Brauprozess beim Brauen von Bier zum atmosphärischen Kochen der Würze eingesetzt wird. Im dargestellten Ausführungsbeispiel ist die Würzepfanne 1 mit einem Röhreninnenkocher 2 ausgestattet, der zum Erhitzen und Kochen der Würze dient. Die Erfindung ist jedoch gleichermaßen auch auf Würzepfannen mit Außenkochern oder auch auf kombinierte Whirlpool und Würzepfannen anwendbar.

Der Innenkocher weist einzelne Röhren 15 auf, durch die das Heizmedium über die Zuleitung 16, z.B. Heizdampf, zugeführt wird. An die Dampfleitung 16 ist ein Sensor 8 angeschlossen, der entweder die Dampftemperatur oder den Dampfdruck oder beides erfassen kann. Der Sensor gibt über eine Leitung 9 sein Signal an eine Steuereinrichtung 11, die beispielsweise ein Prozessrechner sein kann, ab. Die Steuereinrichtung 11 weist eine Eingabetastatur 10 auf, deren Funktion unten noch erläutert wird.

Die Steuereinrichtung ist u.a. über eine Steuersignalleitung 12 an die vorzugsweise frequenzgeregelte Entnahmepumpe 4 angeschlossen. Die Entnahmepumpe kann über die Entnahmeleitung 3 Würze 17 aus der Würzepfanne während und nach dem Kochprozess entnehmen. Die Pumpe 4 fördert die Würze entweder über das Ablaufventil 5 in einen nachgeschalteten Heißtrubabscheider (z.B. Whirlpool) oder aber über das Rücklaufventil 7 zurück in die Würzepfanne 1, je nachdem welches der beiden Ventile 5, 7 geöffnet ist.

Zusätzlich wird die Temperatur der Würze 17 in der Würzepfanne 1 auch noch über einen Temperatursensor 18 gemessen, was insbesondere während des Aufheizens von Bedeutung ist. Das Messsignal kann über eine Leitung 13 ebenfalls in die Steuereinrichtung 11 gegeben und dort verarbeitet werden.

Die Steuereinrichtung 11 ist so aufgebaut, dass es möglich ist, in der Steuereinrichtung 11 über die Eingabeeinheit 10 Sollwertprofilkurven zu hinterlegen, nach dem die Heizleistung des Würzekochers und die Pumpleistung der Umwälzpumpe während der Aufheiz- und/oder Kochprozess gefahren werden soll.

Die Sollwertprofilkurve gibt Parameter für Sollwerte an, die die Heizleistung des Kochers während des Aufheiz- und Kochprozesses wiederspiegeln. Solche Parameter sind z.B. der Dampfdruck oder die Dampftemperatur des Heizdampfes, mit dem der Kocher 2 beheizt wird. Auch die Heißwassertemperatur des Kochers kann dafür herangezogen werden. Generell eignen sich alle Parameter, die Einfluss auf den Energieeintrag in die Würze in der Würzepfanne haben.

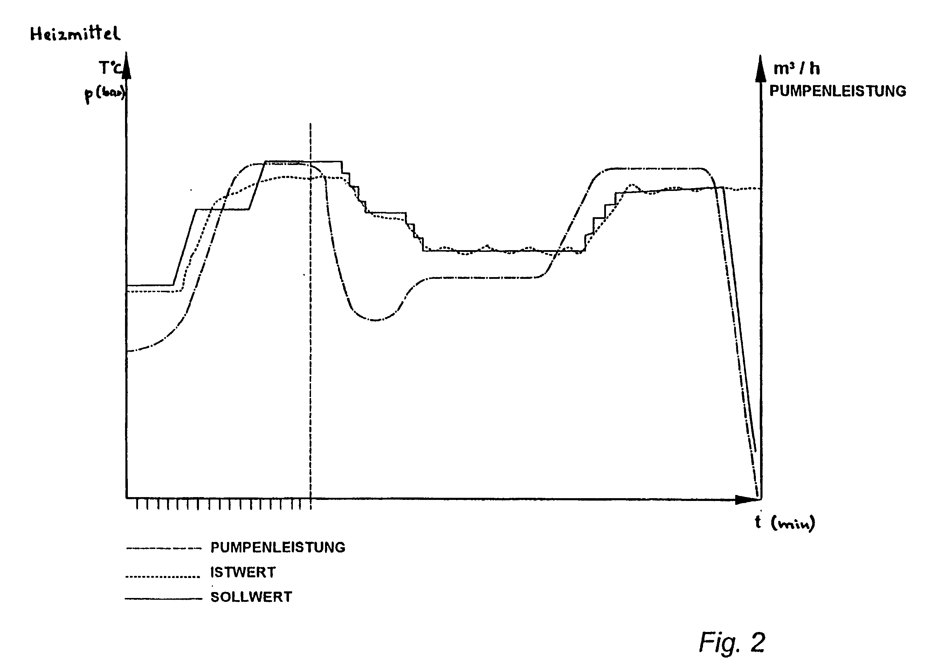

Der Brauer kann nun über die Eingabeeinheit 10 einen bestimmten Verlauf des entsprechenden Sollwertes als Sollwertprofilkurve vorgeben. In dem Ausführungsbeispiel der Figur 2 ist die Sollwertprofilkurve als durchgezogene schwarze Linie dargestellt. In dem konkreten, einer tatsächlich durchgeführten Messung entsprechenden Beispiel spiegelt die Sollwertprofilkurve den Dampfdruck bzw. die Dampftemperatur des Heizdampfes, mit dem der Innenkocher beheizt ist, wieder. Der erste Bereich in dem Diagramm bis zu der gestrichelten Vertikallinie stellt dabei die Aufheizphase dar. Der eigentliche Kochvorgang findet rechts von der gestrichelten Vertikallinie statt. Die Abszisse links gibt die Heizmitteltemperatur T wieder, während die Koordinate die Zeitachse t darstellt. Auf der rechten Abszisse ist die Pumpenleistung der Umwälz-(Entnahme)pumpe (s. Bezugszeichen 4 in Figur 1) mit aufgetragen. Das Diagramm der Sollwertvorgabe für die Pumpenleistung ist strichpunktiert eingezeichnet.

Der Brauer gibt nun also eine Sollwertprofilkurve z.B. für die Heizmitteltemperatur entsprechend der durchgezogenen Linie vor. Dabei kann er individuell den Kochvorgang in einzelne Zeitabschnitte unterteilen. Die einzelnen Zeitsegmente sind links auf der Zeitachse mit kleinen Strichen dargestellt. Typische Zeitabstände können ein oder zwei Minuten betragen. Für jeden dieser Zeitabstände kann der Brauer einen bestimmten Wert vorgeben, so dass sich insgesamt dann die durchgezogene Kurve darstellt. Insbesondere ist in dem gezeigten Ausführungsbeispiel im letzten Drittel eine stufenweise Anhebung der Dampftemperatur (Druck) zu sehen. Auch die Pumpenleistung wird im letzten Drittel angehoben. Mit dieser Art der Verfahrensführung kann insbesondere wirkungsvoll am Ende des Kochvorganges Dimethylsulfid (DMS) ausgetrieben werden.

Diese Sollwertkurven werden nun in der Steuereinrichtung 11 abgespeichert. Für den aktuellen Aufheiz- und Kochvorgang holt sich nun die Steuereinrichtung 11 die Daten aus der Sollwertkurve als Sollwert und vergleicht sie mit aktuellen, im Laufe des Kochvorgangs gemessenen Werten, z.B. den Messsignalen des Sensors 8 der Figur 1. Der so gemessene Istwert z.B. des Dampfdruckes ist in Figur 2 punktiert dargestellt. Die Steuereinrichtung gibt nun entsprechende Stellsignale, beispielsweise über die Leitung 19 an ein nicht näher gezeigtes Stellglied, das den Dampfdruck für den Kocher 2 beeinflussen kann, oder aber wenn die Sollwertvorgabe die Dampftemperatur wiederspiegelt, über die Leitung 20 entsprechende Signale an den Dampftemperaturregler (ebenfalls nicht dargestellt) ab, so dass der gemessene Istwert möglichst nahe dem vorgegebenen Sollwertprofil folgt. Natürlich können bestimmte Schwankungen und Toleranzbereiche zugelassen werden, in denen ohne nachzuregeln der Istwert vom Sollwert abweichen darf.

Auch wird abhängig von einem gewünschten ebenfalls abgespeicherten Profil die Pumpenleistung der vorzugsweise frequenzgeregelten Umwälz-Entnahmepumpe 4 geregelt, wobei die Pumpe dabei ihre Signale über die Steuerleitung 12 empfängt. Beim Umpumpen ist das Entnahmeventil 5 geschlossen und das Rücklaufventil geöffnet. Entsprechend der strichpunktiert dargestellten Kurve variiert nun die Pumpenleistung, was ebenfalls Einfluss auf den Würzekochvorgang haben kann. Insbesondere ist erkennbar, dass beim dargestellten Ausführungsbeispiel im letzten Drittel die Pumpenleistung noch einmal stark angehoben wird, so dass möglichst viel Würze umgewälzt wird. Die umgewälzte Würze strömt bekanntermaßen gegen den Umlenkschirm 14, so dass sich ein Fächer ausbildet und sich eine hohe Ausdampffläche ergibt. Gerade im Bereich des letzten Drittels des Kochvorgangs ist dies von Vorteil.

Die erfindungsgemäße Verfahrensführung ermöglicht es dem Brauer, individuell für einen Brauvorgang abhängig vom Biertyp vom zu verarbeitenden Malz, vom Hopfen und dergl. mehr ganz individuell den Würzekochvorgang durch Beeinflussung entsprechender Parameter zu wählen, so dass eine sehr feine und individuelle Führung des Aufheiz- und/oder Kochvorganges und daher eine Optimierung der Würzequalität erzielt wird.

## Patentansprüche

1. Verfahren zum Aufheizen und atmosphärischen Kochen der Würze bei der Bierherstellung, bei dem die Würze in einem Gefäß, vorzugsweise einer Würzepfanne, über eine bestimmte Zeit unter wenigstens zeitweiser Umwälzung mittels einer Umwälzpumpe aufgeheizt und gekocht wird,
**dadurch gekennzeichnet, dass**
für die Leistung der Umwälzpumpe und für wenigstens einen weiteren die Heizleistung des Würzekochers während des Aufheiz- und/oder Kochprozesses beeinflussender Parameter eine Sollwertprofilkurve erstellt und festgehalten wird, dann während des Aufheiz- und/oder Kochprozesses die jeweiligen Istwerte dieser Parameter kontinuierlich oder in kleinen Zeitabständen erfasst und mit den zugeordneten Sollwerten verglichen werden und daß dann der Aufheiz- und/oder Kochprozeß so gefahren wird, daß die Istwerte den Sollwertprofilkurven im wesentlichen folgen.

2. Verfahren nach Anspruch 1,
**dadurch gekennzeichnet, dass**
eine Sollwertprofilkurve die Dampftemperatur oder den Dampfdruck des Heizdampfes des Würzekochers wiedergibt.

3. Verfahren nach Anspruch 1,
**dadurch gekennzeichnet, dass**
eine Sollwertprofilkurve die Heißwassertemperatur des Würzekochers wiedergibt.

4. Verfahren nach wenigstens einem der Ansprüche 1 bis 3,
**dadurch gekennzeichnet, dass**
während der Aufheizphase die Sollwertprofilkurve die an einer oder mehreren Stellen gewünschte Temperatur der Würze wiedergibt.

5. Verfahren nach wenigstens einem der vorangegangenen Ansprüche,
**dadurch gekennzeichnet, dass**
in der die Heizleistung des Würzekochers beeinflussenden Sollwertprofilkurve etwa im Bereich des letzten Drittels der Kochzeit eine Phase mit gegenüber dem vorhergehenden Sollwert deutlich erhöhtem Sollwert vorgesehen ist.

6. Verfahren nach wenigstens einem der vorangegangenen Ansprüche,
**dadurch gekennzeichnet, dass**
die Sollwertprofilkurve in einzelne Zeitabschnitte unterteilt ist, wobei jeweils ein Zeitabschnitt bevorzugt 1 bis 3 Minuten entspricht.

7. Vorrichtung zur Durchführung des Verfahrens nach einem der vorangegangenen Ansprüche mit einem mit einer Heizeinrichtung zusammenarbeitenden Behälter zur Aufheizung und zur atmosphärischen Kochung der Würze und mit einer Steuereinrichtung zur Steuerung dieser Vorgänge,
**gekennzeichnet durch**
eine Eingabeeinheit (10) für die Steuereinrichtung (11), über die wenigstens eine Sollwertprofilkurve wenigstens eines die Heizleistung des Würzekochers während des Aufheiz- und/oder Kochprozesses beeinflussenden Parameters und eine die Leistung der Umwälzpumpe vorgebende Sollwertprofilkurve eingebbar ist;
einen Speicher zum Abspeichem der Sollwertprofilkurven;
wenigstens einen Sensor (8; 18) zur Messung des Istwertes des die Heizleistung des Würzekochers beeinflussenden Parameters und
eine Vergleichereinrichtung zum Vergleichen von Soll- und Istwert und zur Ausgabe eines Steuersignals (19; 20; 12) über die Heizleistung des Würzekochers abhängig von der Differenz zwischen Soll- und Istwert beeinflusst wird.

8. Vorrichtung nach Anspruch 7,
**dadurch gekennzeichnet, dass**
der Sensor ein die Heißwassertemperatur des Würzekochers messender Sensor ist.

9. Vorrichtung nach Anspruch 7 oder 8,
**dadurch gekennzeichnet, dass**
der Sensor (8) ein den Dampfdruck oder die Dampftemperatur des Heizdampfes des Würzekochers messender Sensor ist.

10. Vorrichtung nach einem der Ansprüche 1 bis 9,
**dadurch gekennzeichnet, dass**
die Steuereinrichtung (11) die Drehzahl einer die Würze umwälzenden Pumpe (4) beeinflusst.

## Claims

1. A method of heating and atmospherically boiling wort in the beer brewing process in which the wort is heated and boiled in a vessel, preferably in a wort copper, over a predetermined period of time during which it is at least temporarily circulated by means of a circulation pump,
**characterized in that**
a target value profile curve is generated and held for the power of the circulation pump and for at least one further parameter influencing the heating power of the wort boiler during the heating and/or boiling process, then during the heating and/or boiling process the corresponding actual values of said parameters are detected continuously or at small time intervals and compared to the assigned target values and that the heating and/or boiling process is then performed such that the actual values substantially follow the target value profile curves.

2. A method according to claim 1,
**characterized in that**
a target value profile curve represents the vapor temperature or the vapor pressure of the heating vapor of the wort boiler.

3. A method according to claim 1,
**characterized in that**
a target value profile curve represents the heating water temperature of the wort boiler.

4. A method according to at least one of claims 1 to 3,
**characterized in that**
during the heating phase, the target value profile curve represents the temperature of the wort desired at one or a plurality of locations.

5. A method according to at least one of the preceding claims,
**characterized in that**
a phase having a target value that is clearly increased as compared to the preceding target value is provided in the target value profile curve influencing the heating power of the wort boiler, approximately in the range of the last third of the boiling time.

6. A method according to at least one of the preceding claims,
**characterized in that**
the target value profile curve is subdivided into individual time sections, wherein one time section preferably corresponds to 1 to 3 minutes.

7. An apparatus for carrying out the method according to one of the preceding claims, comprising a vessel cooperating with a heating means for heating and atmospherically boiling the wort, and comprising a control means for controlling said processes,
**characterized by**
an input means (10) for the control means (11 ) by means of which at least one target value profile curve of at least one parameter influencing the heating power of the wort boiler during the heating and/or boiling process, and one target value profile curve determining the power of the circulation pump can be input;
a memory for storing the target value profile curve;
at least one sensor (8; 18) for measuring the actual value of the parameter determining the heating power of the wort boiler, and
a comparator means for comparing target value and actual value and for outputting a control signal (19; 20; 12) through which the heating power of the wort boiler is influenced in accordance with the difference of the target value to the actual value.

8. An apparatus according to claim 7,
**characterized in that**
the sensor is a sensor measuring the hot water temperature of the wort boiler.

9. An apparatus according to claim 7 or 8,
**characterized in that**
the sensor (8) is a sensor measuring the vapor pressure or the vapor temperature of the heating vapor of the wort boiler.

10. An apparatus according to one of claims 1 to 9,
**characterized in that**
the control means (11) influences the speed of a pump (4) circulating the wort.

## Revendications

1. Procédé pour le chauffage et l'ébullition du moût à pression atmosphérique au cours de la préparation de la bière, dans lequel le moût est chauffé et porté à ébullition dans une cuve, de préférence une chaudière à moût, sur une durée définie avec circulation au moins intermittente au moyen d'une pompe de circulation, **caractérisé en ce qu'**une courbe de valeurs de consigne est établie et consignée pour le débit de la pompe de circulation et pour au moins un autre paramètre influençant la puissance calorifique de la chaudière à moût pendant le processus de chauffage et d'ébullition, puis les valeurs effectives respectives de ces paramètres sont enregistrées en continu ou à de faibles intervalles de temps pendant le processus de chauffage et d'ébullition et comparées aux valeurs de consigne associées, et le processus de chauffage et d'ébullition est ensuite conduit de telle sorte que les valeurs effectives suivent essentiellement les courbes de valeurs de consigne.

2. Procédé suivant la revendication 1, **caractérisé en ce qu'**une courbe de valeurs de consigne reproduit la température de vapeur ou la pression . de vapeur de la vapeur de chauffage de la chaudière à moût.

3. Procédé suivant la revendication 1, **caractérisé en ce qu'**une courbe de valeurs de consigne reproduit la température d'eau chaude de la chaudière à moût.

4. Procédé suivant l'une au moins des revendications 1 à 3, **caractérisé en ce que** la courbe de valeurs de consigne pendant l'opération de chauffage reproduit la température du moût souhaitée en un ou plusieurs points.

5. Procédé suivant l'une au moins des revendications précédentes, **caractérisé en ce qu'**une phase avec une valeur de consigne nettement accrue par rapport à la valeur de consigne précédente est prévue à peu près dans le troisième tiers de la durée d'ébullition dans la courbe de valeurs de consigne influençant la puissance calorifique de la chaudière à moût.

6. Procédé suivant l'une au moins des revendications précédentes, **caractérisé en ce que** la courbe des valeurs de consigne est subdivisée en intervalles de temps individuels, chaque intervalle correspondant de préférence à 1 à 3 minutes.

7. Dispositif pour la mise en oeuvre du procédé suivant l'une des revendications précédentes, comprenant un récipient pour le chauffage et l'ébullition à pression atmosphérique du moût qui coopère avec un agencement de chauffage, et un agencement de commande pour commander ces opérations, **caractérisé par**
une unité d'entrée (10) pour l'agencement de commande (11), par l'intermédiaire de laquelle peuvent être introduites au moins une courbe de valeurs de consigne d'au moins un paramètre influençant la puissance calorifique de la chaudière à moût pendant le processus de chauffage et d'ébullition, et une courbe de valeurs de consigne prédéfinissant le débit de la pompe de circulation ;
une mémoire pour mémoriser les courbes de valeurs de consigne ;
au moins un capteur (8 ; 18) pour mesurer la valeur effective du paramètre influençant la puissance calorifique de la chaudière à moût et
un comparateur pour comparer la valeur de consigne et la valeur effective et émettre un signal de commande (19 ; 20 ; 12) par l'intermédiaire duquel est influencée la puissance calorifique de la chaudière à moût en fonction de la différence entre la valeur de consigne et la valeur effective.

8. Dispositif suivant la revendication 7, **caractérisé en ce que** le capteur est un capteur mesurant la température d'eau chaude de la chaudière à moût.

9. Dispositif suivant l'une des revendications 7 et 8, **caractérisé en ce que** le capteur (8) est un capteur mesurant la pression de vapeur ou la température de vapeur de la vapeur de chauffage de la chaudière à moût.

10. Dispositif suivant l'une des revendications 1 à 9, **caractérisé en ce que** l'agencement de commande (11) influe sur la vitesse de rotation d'une pompe (4) faisant circuler le moût.
